(19) Europäisches Patentamt
European Patent Office
Office européen des brevets

(11) **EP 2 827 573 A2**

(12) **EUROPEAN PATENT APPLICATION**

(43) Date of publication:
**21.01.2015 Bulletin 2015/04**

(51) Int Cl.:
**H04N 1/00** *(2006.01)*

(21) Application number: **14150936.4**

(22) Date of filing: **13.01.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **18.07.2013 KR 20130084824**

(71) Applicant: **Samsung Electronics Co., Ltd**
**Gyeonggi-do 443-742 (KR)**

(72) Inventors:
 • **Cho, Hyun-ki**
 **Gyeonggi-do (KR)**
 • **Woo, Sang-bum**
 **Seoul (KR)**
 • **Kim, Soo-yong**
 **Gyeonggi-do (KR)**
 • **Park, Young-jae**
 **Gyeonggi-do (KR)**
 • **Yu, Jae-il**
 **Gyeonggi-do (KR)**

(74) Representative: **Walaski, Jan Filip et al**
**Venner Shipley LLP**
**200 Aldersgate**
**London**
**EC1A 4HD (GB)**

(54) **Image forming apparatus and method for colour registration correction**

(57)     An image forming apparatus includes a registration unit which performs colour registration correction by using a registration sensor, an image forming unit which forms a preset first mark whose width is large enough to fall within a range recognizable by the registration sensor on an image forming medium, and a storage which stores a specific area of an image forming medium recognizable by the registration sensor by using the formed preset first mark. The image forming apparatus further includes a controller which controls the image forming apparatus to form a preset second mark to perform colour registration correction within a range recognizable by the registration sensor by using information regarding the specific area which was previously stored in the storage, and the controller controls the registration unit to perform colour registration correction by using the formed preset second mark.

FIG. 4

EP 2 827 573 A2

## Description

The present invention relates to an image forming apparatus and a colour registration correction method. More particularly, the exemplary embodiments disclosed herein relate to an image forming apparatus and a colour registration correction method which may reduce toner consumption by reducing the size of a pattern formed during the colour registration process.

In general, an e-photo type printer such as a colour laser printer includes 4 organic photo conductor (OPC) drums - (Dy)(Dc)(Dm)(Dk) - corresponding to 4 colours including yellow, cyan, magenta, and black. The e-photo type printer may further include an exposure apparatus forming an electrostatic latent image by scanning light on each OPC drum (Dy)(Dc)(Dm)(Dk), a developing apparatus which develops an electrostatic latent image by using developing solutions by colours, and an image forming medium (for example, a transfer belt or intermediate transfer belt) which sequentially receives developed images on each OPC drum (Dy)(Dc)(Dm)(Dk), forms an image of completed colour, and prints it on a printing medium (e.g., glossy paper, plain paper, art paper, overhead projector film, and the like).

Accordingly, in order to print one colour image a user wants to print, images of each colour are developed on 4 OPC drums (Dy)(Dc)(Dm)(Dk) and printed on the same position on a transfer belt to be overlapped with each other, and the colour images are printed on the printing medium.

In order to make a colour image a user desires by overlapping 4 colours on the same location of an image on a transfer belt, the location of where the printing of an image begins and the location of where the printing of an image ends on each OPC drum (Dy)(Dc)(Dm)(Dk) should be exactly the same for each of the 4 colours. The reason is that, even though images are clearly developed on 4 OPC drums (Dy)(Dc)(Dm)(Dk), if the location of each colour is not exactly the same when each image is transferred, a colour image which is finally obtained may not result in an accurate colour and/or image.

However, an error due to a failure in arranging an OPC drum correctly, an error in the processing of an optical lens, etc. can occur, which may cause an error in the arranging of a colour image. For example, the error may cause the colour image to appear blurred or to have streaks. Thus, colour registration (or colour arrangement) may be applied to solve or prevent these problems from occurring.

Such colour registration may be performed by using a registration sensor mounted on an image forming apparatus. A registration sensor may scan light on a registration pattern developed on an image forming medium, sense the reflected light, and measure errors in an arrangement of an image.

As the registration sensor may be located in a fixed location, a registration pattern to be formed on an image forming medium should be formed within a range recognizable by a registration sensor.

However, in some circumstances a registration pattern sometimes cannot be located within a range recognizable by the sensor. This may be due to a location error according to an assembly by sets or a video margin error, etc. In this case, a registration sensor cannot sense a registration pattern, and thus colour registration cannot be performed.

In this regard, in the past, an ample margin is given to a registration pattern in consideration of the assembly tolerance associated with the installation of a registration sensor, LSU (Laser Scanning Unit), and a frame, etc. Thus, conventional techniques have formed a registration pattern which includes the ample margin, to reduce a deviation and/or to enable a registration pattern to be located within a sensing range.

However, when such an ample margin is given to a registration pattern, it leads to an increase in toner consumption in forming a registration pattern. Moreover, colour registration is a repetitive task with a regular cycle. That is, colour registration may be performed quite often, and thus coming up with a method which can reduce toner consumption required for a colour registration process is highly desirable.

Additional aspects and/or advantages will be set forth in part in the description which follows and, in part, will be apparent from the description, or may be learned by practice of the invention.

An aspect of the exemplary embodiments is designed in accordance with the above-described necessities and the example embodiments provided herein are directed to and disclose an image forming apparatus and a colour registration correction method which may reduce toner consumption by decreasing the size of a pattern formed in the midst of colour registration.

According to an exemplary embodiment, an image forming apparatus includes a registration unit configured to (adapted to, capable of, suitable for, operable to, etc.) perform colour registration correction by using a registration sensor, an image forming unit configured to (adapted to, capable of, suitable for, operable to, etc.) form a preset first mark whose range is greater than (or overlaps with) a range recognizable by the registration sensor on an image forming medium, a storage configured to (adapted to, capable of, suitable for, operable to, etc.) store a specific area (or information about a specific area) of an image forming medium recognizable by the registration sensor by using the formed first mark, and a controller configured to (adapted to, capable of, suitable for, operable to, etc.) control the image forming unit to form a second mark to perform colour registration correction within a range recognizable by the registration sensor by using the specific area (or information about the specific area) of the image forming medium which is stored in the storage, and configured to (adapted to, capable of, suitable for, operable to, etc.) control the registration unit to perform colour registration correction by using the formed second mark.

The controller may determine whether mark location adjustment is required, and when mark location adjustment is required, the controller may control the image forming unit to form the preset first mark on the image forming medium, controls the registration unit so that the registration sensor senses an area of the image forming apparatus recognizable by the registration sensor, by using the formed first mark, and store the sensed area on the storage.

The controller may determine whether mark location adjustment is required based on at least one of whether the image forming apparatus is initially installed and whether a consumable in the image forming apparatus is replaced.

Meanwhile, an area of the image forming medium recognizable by the registration sensor may include a Y offset to control a timing of a mark forming and an X offset to control a printing location in right and left directions.

The controller may control the image forming apparatus to form a preset second mark within a range recognizable by the registration sensor, by using the X offset and the Y offset.

The preset second mark may be composed of two patterns whose interval changes in a main scanning direction of an image forming apparatus. The width of the second mark may be less than a width of the first mark.

The image forming unit sequentially may form a plurality of preset second marks corresponding to each of a plurality of colours.

The registration unit may sense an X offset and a Y offset among a plurality of colours and perform colour registration correction by using a plurality of preset second marks corresponding to each of the plurality of colours.

The registration unit may include a plurality of registration sensors disposed in a main scanning direction.

The image forming medium may be at least one of a photoconductive drum, an intermediate transfer belt, and a paper transfer belt.

The registration controller may analyze the surface of the image forming medium to determine whether an area exists which has a quality lower than a predetermined threshold, based on an output of reflected light from the image forming medium. The registration controller may store an area of the image forming medium in the storage when it is determined the area has a quality lower than the predetermined threshold. The registration controller may control the image forming unit to form the second mark on an area of the image forming medium, excluding an area determined to have a quality lower than the predetermined threshold, by referring to the storage.

A density of patterns included in the second mark may be greater than a density of patterns included in the first mark. The patterns included in the first mark may not intersect with one another and the patterns included in the second mark may not intersect with one another.

A colour registration method of an image forming apparatus having a registration sensor includes forming a preset first mark whose range is greater than a range recognizable by the registration sensor, storing a specific area of an image forming medium recognizable by the registration sensor by using the formed first mark, forming a preset second mark on the image forming medium within a range recognizable by the registration sensor by using an area which is stored, and performing colour registration correction by using the formed second mark.

In this case, a width of the second mark may be narrower or less than the width of the first mark.

The method may further include determining whether mark location adjustment is required, and when forming the first mark, the sensing and storing the specific area may be performed when the mark location adjustment is required.

The determining may include determining whether mark location adjustment is required based on at least one of whether the image forming apparatus is initially installed and whether a consumable in the image forming apparatus is replaced.

An area of the image forming medium recognizable by the registration sensor may include a Y offset to control the timing of forming a mark and an X offset to control a printing location in right and left directions.

The forming the second mark may include forming a preset second mark within a range recognizable by the registration sensor, by using the X offset and the Y offset.

The preset second mark may be composed of two patterns whose interval changes in a main scanning direction of an image forming apparatus.

The forming the second mark may include sequentially forming a plurality of preset second marks corresponding to each of a plurality of colours.

The performing colour registration correction may include sensing an X offset and a Y offset among a plurality of colours and performing colour registration correction by using a plurality of preset second marks corresponding to each of the plurality of colours.

The image forming apparatus may include a plurality of registration sensors disposed in a main scanning direction.

The image forming medium may be at least one of a photoconductive drum, an intermediate transfer belt, and a paper transfer belt.

The method may further include analyzing the surface of the image forming medium to determine whether an area exists which has a quality lower than a predetermined threshold, based on an output of reflected light from the image forming medium. The storing may further include storing an area of the image forming medium when it is determined the area has a quality lower than the predetermined threshold. The forming of the second mark may further include excluding an area determined to have a quality lower than the predetermined threshold.

The density of patterns included in the second mark may be greater than a density of patterns included in the first mark. The patterns included in the first mark may not intersect with one another and the patterns included in the second mark may not intersect with one another.

A colour registration method of an image forming apparatus having a registration sensor, may include forming a first mark including a plurality of patterns on an image forming medium, calculating and storing error values corresponding to the first mark by comparing a distance between the plurality of patterns to a reference distance, and forming a second mark including a plurality of patterns on an image forming medium.

The first mark may have a first width greater than a sum of the beam width of the registration sensor and assembly tolerances corresponding to at least one of the registration sensor, laser scanning unit, and frame of the image forming apparatus. The second mark may have a second width which is less than the first width and the second mark may be formed on the image forming medium at a position determined based on the stored error values.

The above and/or other aspects of the present inventive concept will be more apparent by describing certain exemplary embodiments of the present inventive concept with reference to the accompanying drawings, in which:

> FIG. 1 is a block diagram illustrating the configuration of an image forming apparatus according to an exemplary embodiment.
> FIG. 2 is a view illustrating the detailed configuration of the registration unit of FIG.1.
> FIG. 3 is a view to explain colour registration operation.
> FIG. 4 is a view illustrating an example of forming a preset first mark for adjustment of a mark.
> FIG. 5 is a view illustrating a first mark according to an exemplary embodiment.
> FIGS. 6-7 are views to explain a method for correcting location of a pattern by using a first mark.
> FIG. 8 is a view illustrating example embodiments of patterns having various inclines.
> FIG. 9 is a view illustrating an example of forming a preset second mark for colour registration.
> FIG. 10 is a view illustrating an example of a second mark according to an exemplary embodiment.
> FIG. 11 is a view to explain a method of colour registration correction using a second mark.
> FIG. 12 is a view to explain an exemplary embodiment which concurrently forms a first pattern and a second pattern.
> FIG. 13 is a view to explain a colour registration method according to an exemplary embodiment.

In the following description, like drawing reference numerals are used for like elements, even in different drawings. The matters disclosed below in the description, such as a detailed construction and discussion of various elements, are provided to assist in a comprehensive understanding of the exemplary embodiments. However, the exemplary embodiments may be practised without those specifically defined matters. Also, well-known functions or constructions are not described in detail since they would obscure the application with unnecessary detail.

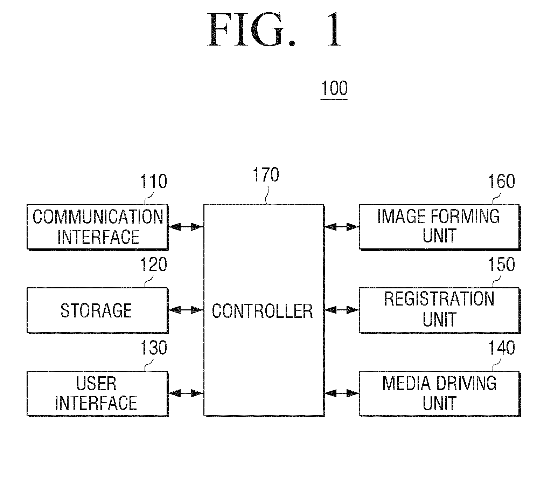

Referring to FIG. 1, the image forming apparatus 100 includes a communication interface 110, a storage 120, a user interface 130, a media driving unit 140, a registration unit 150, an image forming unit 160, and a controller 170. Herein, the image forming apparatus 100 may refer to an apparatus performing generating, printing, receiving, and transmitting of image data. The image forming apparatus 100 may include a printer, a copy machine, a fax, or a multifunction printer which combines two or more functions of the printer, copy machine, and fax. The image forming apparatus 100 may also include a 3D printer.

The communication interface 110 may be connected to a printing control terminal (not illustrated) such as a personal computer (PC), a notebook PC, a PDA, a tablet, a smartphone, a digital camera, and the like. For example, the communication interface 110 may be formed or constructed to connect the image forming apparatus 100 with an external apparatus, and may have a format to be connected to an external apparatus through a LAN (Local Area Network) and/or internet network, and a format to be connected through a USB (Universal Serial Bus), a parallel communication physical interface, a serial communication physical interface, and the like. However, the disclosure is not limited to these example embodiments, and the image forming apparatus 100 may be connected to an external apparatus over any number of wired or wireless networks, or a combination thereof.

In addition, the communication interface 110 receives printing data from a print control terminal. Moreover, the communication interface 110 may receive a command from a printing control terminal apparatus notifying the image forming apparatus 100 to perform colour registration. Meanwhile, in an exemplary embodiment, it is explained that printing data is received from a printing control terminal apparatus, but if an image forming apparatus corresponds to a multifunction printer capable of printing, it may generate printing data by itself by using a scanner mounted in the multifunction printer. In addition, if an image forming apparatus according to an exemplary embodiment corresponds to a fax machine capable of transceiving a fax, printing data may be received through a telephone line.

The storage 120 may store printing data. For example, the storage 120 may store printing data received through the communication interface 110. And, the storage 120 may store history information of a printing job performed by the image forming apparatus 100. The storage 120 may store information (or offset information) on an image forming media recognizable by the registration sensor. The storage 120 may store a section where the state of a surface identified by the registration unit 150 is not in a good condition.

Meanwhile, the storage 120 may be realized as a storage media within the image forming apparatus 100 and an external storage media, for example a removable disk including a USB memory, a web server through a network, etc. The exemplary embodiment illustrates and explains that the storage 120 may located external to the registration unit 150, but a part of a function of the storage 120 may be performed at a storage display mounted in the registration unit 150. For example, the storage 120 may be embodied as a storage medium, such as a nonvolatile memory device, such as a Read Only Memory (ROM), Programmable Read Only Memory (PROM), Erasable Programmable Read Only Memory (EPROM), and flash memory, a USB drive, a volatile memory device such as a Random Access Memory (RAM), a hard disk, floppy disks, a blue-ray disk, or optical media such as CD ROM discs and DVDs, or combinations thereof. However, examples of the storage are not limited to the above description, and the storage may be realized by other various devices and structures as would be understood by those skilled in the art.

The user interface 130 may have a plurality of function keys with which a user may set or select various functions supported by the image forming apparatus 100, and may display various information provided by the image forming apparatus 100. The user interface 130 may be realized as an apparatus which may realize both input and output commands, such as a touch screen and also may be realized as an apparatus which combines a mouse with a monitor. A user, by using a user interface window provided through the user interface 130, may input a command to perform colour registration on the image forming apparatus 100. In the above described example, receiving a command to perform colour registration from a user is explained, but when a command to perform colour registration is not input, the image forming apparatus 100, if a preset condition is satisfied, may automatically perform colour registration without receiving a user input. The user interface 130 may include, for example, one or more of a keyboard, a mouse, a joystick, a button, a switch, an electronic pen or stylus, an input sound device (e.g., a microphone to receive a voice command), an output sound device (e.g., a speaker) a track ball, a remote controller, a portable (e.g., a cellular or smart) phone, a tablet PC, a pedal or footswitch, a virtual-reality device, and so on. The user interface may further include a haptic device to provide haptic feedback to a user. The display and/or monitor provided with the user interface may include a liquid crystal display (LCD), a light emitting diode (LED) display, an organic light emitting diode (OLED) display, a plasma display panel (PDP), a cathode ray tube (CRT) display, and the like, for example. However, the disclosure is not so limited and may include other types of displays.

The media driving unit 140 may rotate an image forming medium. For example, the media driving unit 140 may operate an image forming medium such as an OPC drum (OPC) where an image is formed, an intermediate transfer belt (ITC), and a paper transfer belt, etc.

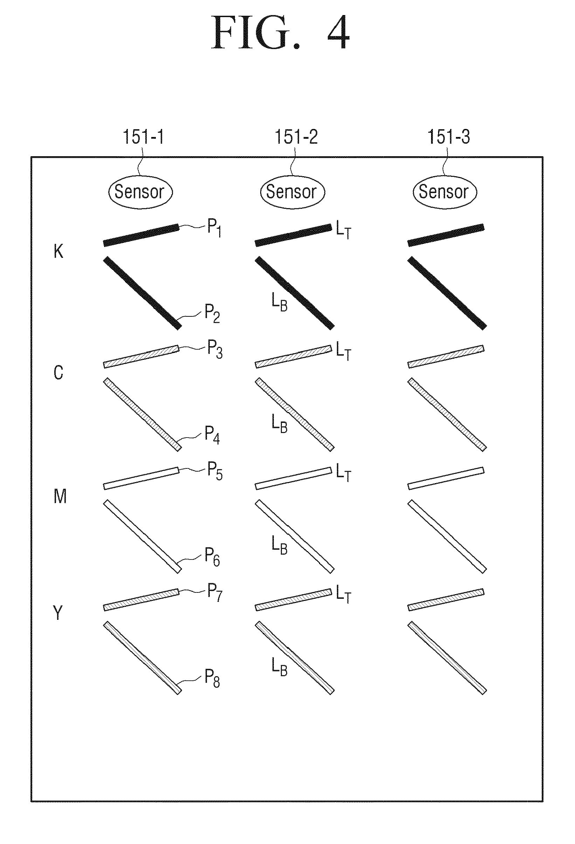

The registration unit 150, by using a first mark formed on the image forming medium, may sense an area of the image forming medium recognizable by the registration. For example, the registration unit 150, when adjustment of a location of a mark is necessary, releases or emits light to the first mark formed on the image forming medium, senses information on an alignment or position (for example, an X offset, a Y offset) of the first mark formed on the image forming medium by using a registration sensor sensing light reflected from the first mark, and based on this, senses an area of the image forming medium where a second mark may be formed. Information on a sensed area may be stored in the storage 120. This operation will be explained later in reference to FIGS. 4-7.

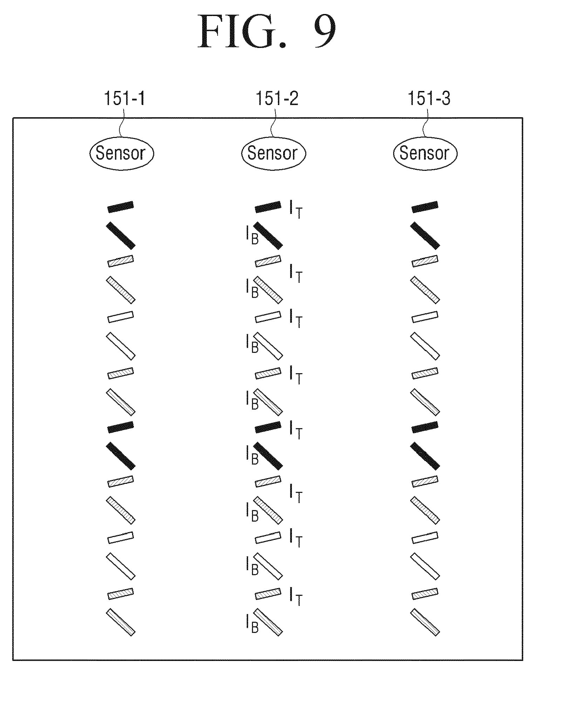

The registration unit 150, by using a second mark formed on the image forming medium, may sense an area of the image forming medium recognizable by the registration. For example, the registration unit 150 may release light to the second mark formed on the image forming medium, sense information on an alignment or position (for example, an X offset, a Y offset) of the second mark formed on the image forming medium by using a registration sensor sensing light reflected from the second mark, and based on this, may perform colour registration. The registration unit 150 may store the alignment or position information among a plurality of the second marks to the storage 120. This operation will be explained later in reference to FIGS. 9-11.

The image forming unit 160 forms an image. For example, the image forming unit 160, by using printing data received through the communication interface 110, may form an image on the image forming medium such as an OPC drum, an intermediate transfer belt, a paper transfer belt, and the like.

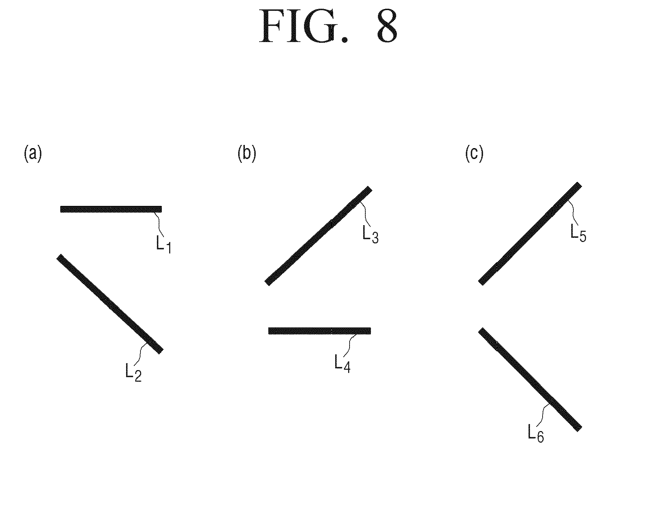

In addition, the image forming unit 160 may form a preset first mark for adjustment of a location of a mark on the image forming medium. For example, the image forming unit 160 may form a preset first mark which has a size that is greater than a range recognizable by the registration sensor on the image forming medium, so that it will fall within the recognition range of the sensor, when the image forming apparatus 100 is initially installed or manufactured for example, and/or when consumables in the image forming apparatus 100 are replaced. For example, the first mark is designed to be large enough (for example sufficiently wide) that it will fall within the range that is recognizable by the registration sensor, irrespective of alignment and other errors. That is, the image forming unit 160 may form a preset first mark for adjustment of a location of a mark on the image forming medium when it is necessary to consider errors (that is, in order to calibrate or calculate tolerance values of various components). Such a first mark may be composed of two patterns whose interval on the image forming medium changes in a main scanning direction. Examples regarding the first mark will be described later by referring to FIG. 8. Operations of the image forming unit 160 will be described later by referring to FIGS. 4-7.

Moreover, the image forming unit 160 may form a preset second mark for colour registration correction on the image forming medium. For example, the image forming unit 160, by using an area of the image forming medium recognizable by the registration sensor stored in the storage 120, may form the preset second mark in a range recognizable by the registration sensor on the image forming medium according to colours supported by the image forming unit 160. For example, the area of the image forming medium recognizable by the registration sensor may include a Y offset to control a timing of the forming of a mark, and an X offset to control a printing location in right and left directions. For example, the colours supported by the image forming unit 160 may include black (K), cyan (C), magenta (M), and yellow (Y). Such second mark may have a narrower width compared to the first mark composed of two patterns whose interval changes in a main scanning direction. The operations of the image forming unit 160 will be described later by referring to FIGS. 9-11.

In other words, the first mark may be formed to be large enough to fall within the recognition range of the registration sensor, to enable the recognition range of the sensor to be determined, so that a second mark may be formed falling wholly within the range of the recognition sensor. The second mark is used for colour registration, so by using the smaller second mark, toner can be saved.

In the midst of forming a mark for colour registration correction, the image forming unit 160, by using a section where the state of a surface is not in a good condition as stored in the storage 120, may form a preset second mark on a section of the image forming medium except the said section. That is, the image forming unit 160 may form the preset second mark on a section of the image forming medium other than a section of the surface of the image forming medium which has been determined to be in a poor condition. How a section or surface of the image forming medium may be determined to be in a good or poor condition will be described later.

The controller 170 performs a control on each configuration of the image forming apparatus 100. For example, the controller 170, when receiving printing data from the printing control terminal apparatus, may control the image forming unit 160 so that the received printing data may be printed. Meanwhile, this exemplary embodiment describes the case of printing data when printing data is received from an external apparatus, but when the image forming apparatus 100 is a device or multifunction printer capable of copying work, the controller 170 may control the image forming unit 160 to print the scanned printing data. The controller may include one or more processors.

In addition, the controller 170 may determine whether or not adjustment of a location of a mark is necessary. For example, the controller 170, when it seems necessary to consider whether the image forming apparatus 100 is installed at an early stage, to consider assembly tolerance of a sensor, LSU, and a frame when consumables in the image forming apparatus 100 are replaced, may determine that adjustment of a location of a mark is necessary. That is, the controller 170 may determine that adjustment of a location of a mark is necessary when an image forming apparatus is first manufactured, or first used. Alternatively, or in addition, the controller 170 may determine that adjustment of a location of a mark is necessary when components (e.g., a sensor and/or LSU) of the image forming apparatus 100 are installed or replaced, or to determine a tolerance level of a component (e.g., a sensor and/or LSU). Alternatively, or in addition, the controller 170 may determine that adjustment of a location of a mark is necessary when consumables (e.g., toner cartridges, components, or a printing medium) is replaced.

When adjustment of a location of a mark is deemed necessary, the controller 170 may control the image forming unit 160 to form the first mark having a greater width than a range recognizable by the registration sensor, control the registration unit 150 to sense an area (that is, offset information) of the image forming medium recognizable by the registration sensor by using the formed mark, and store the sensed area on the storage 120.

Moreover, the controller 170 may determine whether or not performing colour registration is necessary. For example, the controller 170 may determine whether or not performing colour registration is necessary based on history information stored in the storage 120. For example, the controller 170 may determine whether or not performing colour registration is necessary when the image forming apparatus 100 performs printing (e.g., after a preset number of printing operations have been performed or after a preset number of sheets have been printed). For example, the controller 170 may determine whether or not performing colour registration is necessary when a command to perform colour registration is input from the control terminal 10 or the user interface 130. In a case of the controller 170 determining that colour registration is necessary, the afore-mentioned operations, including determining whether adjustment of a location of a mark, rmay be performed.

In addition, when it seems that colour registration needs to be performed for any other predetermined or predefined reason, the controller 170 may control the registration unit 150 to perform colour registration.

As shown above, the image forming apparatus 100 forms a pattern greater than a width recognizable by the registration sensor only when a deviation needs to be considered, detects the location of a mark to be performed in the processes afterwards, and forms a smaller size of a mark in the after registration processes, and thus toner consumption due to registration may be reduced. In addition, by forming a smaller size mark, registration may be performed, or a plurality of marks may be formed more densely, and thus the time required to perform registration may be shortened.

Meanwhile, an exemplary embodiment explains that the adjustment of a location of a mark is performed by forming the second pattern only when an adjustment of a mark is necessary. However, if it is determined that an adjustment of a mark is necessary, the forming of the second mark and forming of the first mark may be performed sequentially. Moreover, when adjustment of a mark is necessary colour registration may be performed to correct a mark by using the second pattern formed.

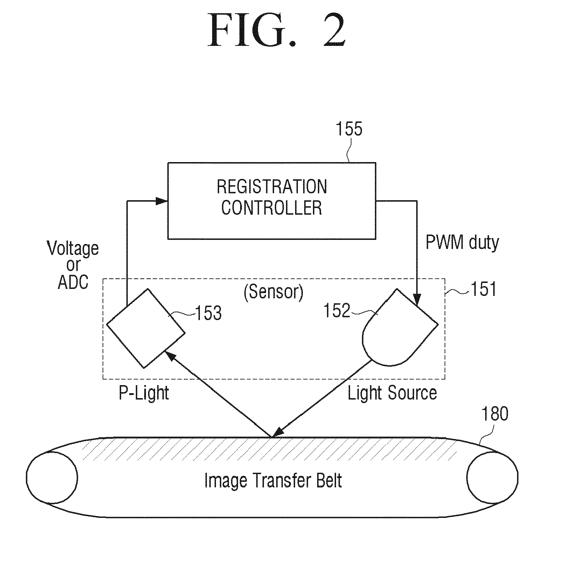

Referring to FIG. 2, the registration unit 150 may include a sensor 151 and a registration controller 155.

The registration sensor 151 includes a light emitting unit 152 and a light receiving unit 153, wherein the light emitting unit 152, according to a control signal provided by the registration controller 155 emits light in a certain level to the image forming medium 180, and the light receiving unit 153 senses light reflected from the image forming medium 180 among light emitted from the light emitting unit. Herein, the light emitting unit may be realized as a light emitting diode (LED). In this case, control signal input to the light emitting unit may be a PWM signal having a certain duty (e.g. duty cycle) to control the lighting output by the LED. As another example, the light emitting unit 152 and light receiving unit 153 may be embodied as an optical sensor which may include a light emitting diode and photodiode. The light emitted by the light emitting unit 152 may have a predetermined wavelength and/or intensity.

The registration controller 155 may adjust the light output by the registration sensor. For example, the registration controller 155 may provide an initial control signal preset in the registration sensor 151, and perform feedback control on a control signal input to the registration sensor 151 according to a difference between the sensed lighting output and a preset target lighting output. For example, when the lighting output of the registration sensor 151 has a stable value, the registration controller 155 may select a lighting output of the registration sensor unit corresponding to the sensed lighting output as the reference lighting output. Such adjustment of the lighting output may be performed by PI control or PID control methods for example. Here, the target lighting output may correspond to an output at the time when the lighting output reflected from the image forming medium is saturated.

The registration controller 155 may sense a section where a surface of the image forming medium is not in a good condition. For example, the registration controller 155 may control the media driving unit 140 to move the image forming medium, and while the image forming medium rotates for one turn, the registration controller 155 may compare the sensed lighting output and a preset lighting output. Moreover, the registration controller 155 may identify the area of the image forming medium as a section whose surface state is not in good condition when the lighting output is sensed to be lower than a preset lighting output. That is, a section or area of the image forming medium may be deemed to be sub-standard the light reflected from that section or area and sensed by the registration controller is less than a preset lighting output. When the sensed lighting output is equal to or greater than the preset lighting output, the section or area of the image forming medium may be deemed to be in a normal or good condition.

In a case in which a surface of a section or area of the image forming medium is deemed to be poor, the registration controller 155, while the image forming medium is rotated, may store information regarding the corresponding section or area whose surface state is poor in the storage 120. The storage 120 may store this section or area using a time information format, and/or the storage 120 may store the section or area whose surface state is not in good condition using a location information format.

The registration controller 155, by using the first mark formed while the image forming medium is rotated, may sense an area of the image forming medium recognizable by the registration sensor 151. For example, the registration controller 155 may release or emit light to the image forming medium, and sense light reflected from the first mark by using the registration sensor 151. The registration controller 155, by using a distance between two patterns included in the first mark, may sense an alignment or position (that is, e.g., an X offset) of a printing location in right and left directions, and sense an alignment or position (e.g., a Y offset) at the time when a mark is formed, by using the time when at least one pattern included in the first mark is included. As such, when the X offset and the Y offset are sensed by the registration controller 155, the registration controller 155, during the colour registration thereafter, may form the second mark within a range recognizable by the registration sensor, by using the X offset and the Y offset already sensed.

In addition, the registration controller 155, by using a plurality of the second marks formed while the image forming medium is rotated, may perform colour registration correction. For example, the registration controller 155 may release or emit light to the image forming medium, and sense light reflected from the plurality of the second marks by using the registration sensor 151. Moreover, the registration controller 155, by using a distance between two patterns included in the second mark, and the location of at least one pattern in one second mark, may sense an alignment or position according to each colour and perform colour registration correction by using this information.

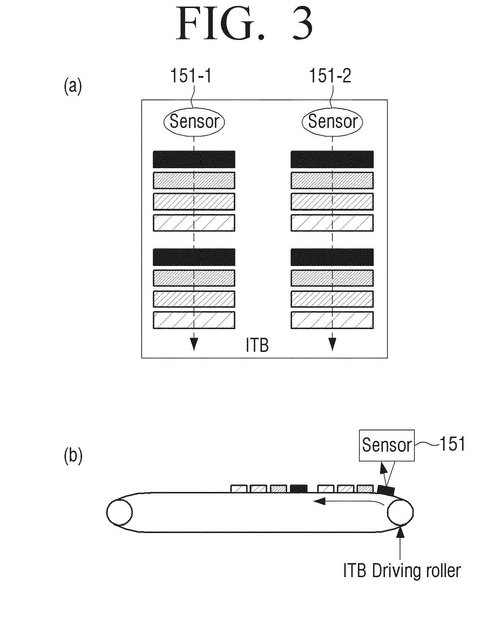

Meanwhile, in explaining FIG. 2, it has been explained that the registration unit 150 may include a registration sensor, and a registration controller. However, registration may be performed in a plurality of areas of the image forming medium. In this case, the registration unit 150 may include two (or three or more) registration sensors and two (or three or more) registration controllers. In addition, such an image forming apparatus including a plurality of registration controllers and registration sensors may be realized in a format which uses feedback control for some or all of the on registration sensors and registration controllers provided. An example embodiment in which two registration sensors are provided will be explained by referring to FIG. 3 below.

With reference to FIG. 3, the image forming unit 160 may form a preset second mark required for colour registration correction as illustrated in FIGS. 3a and 3b on the image forming medium. In an embodiment, the image forming unit 160 may form a preset second mark required for colour registration correction for a section excluding a section whose surface state is not in a good condition.

The light emitting unit of the registration sensor 151 may emit light to the image forming medium, and a reflection pattern may be detected by the light receiving unit of the registration sensor 151. That is, the reflection pattern may be measured as a voltage level of the light receiving unit.

The registration unit 150 may sense a location of a pattern by comparing a voltage level measured by the light receiving unit and a preset voltage level. In addition, the registration unit 150, according to a sensed location of a pattern, may perform colour registration correction.

As described above, the exemplary embodiment of FIG. 3 uses two registration sensors (151-1,151-2), and a left offset and a right offset may be corrected at the same time in accordance with a main scanning direction. Meanwhile, the exemplary embodiment of FIG. 3 illustrates using two registration sensors, but three or more registration sensors may be used in realizing the invention.

Referring to FIG.4, the image forming apparatus may sequentially form the preset first mark in the image forming medium area corresponding to each location of a plurality of registration sensors (151-1, 151-2, 151-3) according to colours of the respective drums. For example, the image forming apparatus 100 may form the first mark in black on three areas of the image forming medium area in a main scanning direction, form the first mark in cyan on three areas of the image forming medium area after a preset time (or distance), form the first mark in magenta on three areas of the image forming medium area after the same preset time (or distance), and the first mark in yellow on three areas of the image forming medium area after the same preset time (or distance). That is, as can be seen from the above description, the first mark is formed at uniform intervals in different colours (black, cyan, magenta, and yellow). However, this particular order is not required and the different colours may be formed in a different order than the above example.

As can be seen from FIG. 4, a first mark in black corresponding to sensor 151-1 including two patterns P1 and P2 may be formed. Meanwhile a first mark in cyan corresponding to sensor 151-1 including two patterns P3 and P4 may be formed, a first mark in magenta corresponding to sensor 151-1 including two patterns P5 and P6 may be formed, and a first mark in yellow corresponding to sensor 151-1 including two patterns P7 and P8 may be formed. Each of the patterns may be different from one another, each of the patterns may be the same as one another, or some of the patterns may be different from one another while some patterns may be the same as other patterns. Sensors 151-1, 151-2, and 151-3 may be disposed at regular or uniform intervals from one another, or may be disposed at irregular or non-uniform intervals from one another. Likewise, the first marks in the main scan direction corresponding to each sensor may be separated at regular or uniform intervals from one another, or may be disposed at irregular or non-uniform intervals from one another.

At the time when components of the image forming apparatus are installed or when the image forming apparatus is manufactured, the assembly tolerance of the registration unit, LSU, and a frame is not known. Also, after the consumables (e.g., toner cartridges) in the image forming apparatus 100 are replaced, the above-described assembly tolerances may change. Thus, after the consumables are replaced, the above-described assembly tolerances may change, so when a width of a mark used to perform colour registration is smaller than a width recognizable by the registration sensor, a mark may be formed at an area outside the area sensable by the registration sensor based on the above-described assembly tolerance.

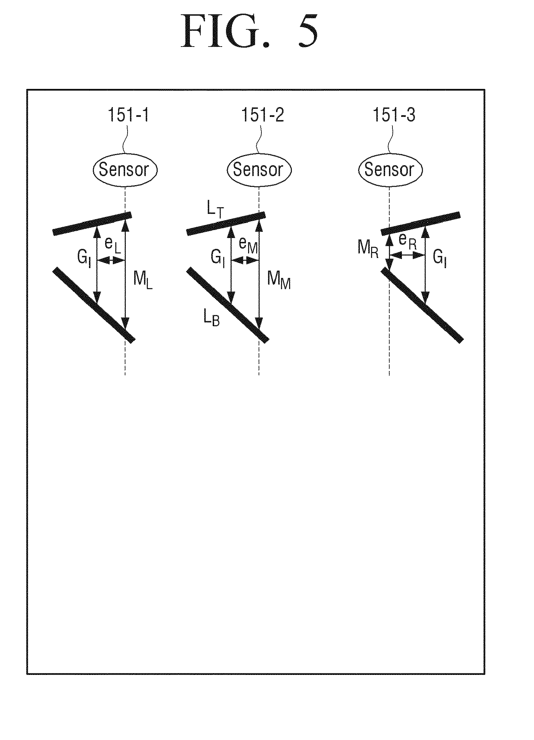

Therefore, the first mark according to the exemplary embodiment is a mark having a large enough margin which considers the assembly tolerances as described above, allowing for installation errors, and for alignment errors which may result when consumables are replaced. An example first mark shown in FIG. 5 will be more thoroughly discussed below.

Meanwhile, it has been explained that the first mark is formed and a location adjustment of the mark is performed, when location adjustment of the mark is necessary, but in realizing the invention, forming the second mark immediately after forming the first mark and performing colour registration operation at the same time may also be realized.

Referring to FIG. 5, the first mark may be composed of two patterns whose interval changes in a main scanning direction of the image forming medium. For example, the first mark may not be crossed and may not be parallel to each other, and may be composed of two straight lines ($L_T$, $L_B$) which do not contact each other.

As can be seen from FIG. 5, a first mark in black corresponding to sensor 151-2 includes two patterns $L_T$ and $L_B$ which are not parallel with one another. $M_m$ may refer to a distance between the two patterns and $G_I$ may refer to a reference distance. FIG. 5 also shows a first mark in black corresponding to sensor 151-1 which includes two patterns which are not parallel with one another, having a distance $M_L$ between the two patterns and a reference distance $G_I$. FIG. 5 further shows a first mark in black corresponding to sensor 151-3 which includes two patterns which are not parallel with one another, having a distance $M_R$ between the two patterns and a reference distance $G_I$. Here, sensors 151-1, 151-2, 151-3, may correspond to left, middle, and right sections of the image forming medium.

Herein, the first pattern ($L_T$) is a straight line with an incline of $\theta_1$ in a main scanning direction.

The second pattern ($L_B$) is a straight line with a reverse incline by $\Phi_1$ in a main scanning direction.

A width of the first mark may be determined based on math formula 1 as shown below.

【Math formula 1】

$$W_M \leq W_1 \leq \frac{L}{n}$$

Here, $W_M$ is the sum of beam width of the sensor ($W_B$), assembly tolerance of the sensor ($W_S$), assembly tolerance of LSU ($W_L$), and assembly tolerance of a frame ($W_F$). $W_1$ is a width of the first mark, which satisfies math formula 2 shown below, L is a width of the image forming medium, and n is the number of registration sensors. When realizing the invention, width ($W_1$) of the first mark, for example, may be about 20 to 30 mm. As can be seen from math formula 1, the width of the first mark should be greater than or equal to the beam width of the sensor plus provide for an allowance (i.e., error tolerance) owing to manufacturing or assembly errors in alignment of the sensor, LSU, and frame, for example. However, the width of the first mark should be less than or equal to width of the image forming medium divided by the number of sensors provided.

【Math formula 2】

$$W_1 = L_T \cos \theta_1 = L_B \cos \Phi_1$$

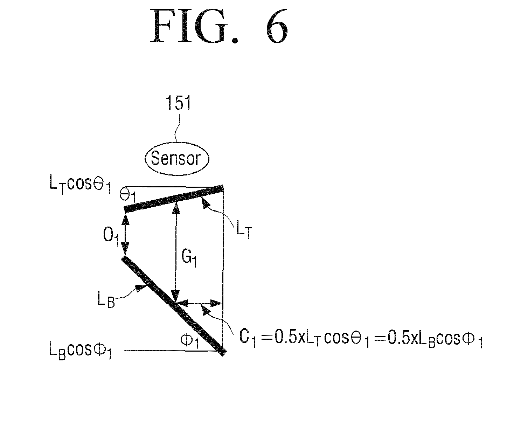

Here, $L_T$ is a length of the first pattern, $L_B$ is length of the second pattern, $\theta_1$ is an angle between the first pattern and a main scanning direction, and $\Phi_1$ is an angle between the second pattern and a main scanning direction. As shown in FIG. 6, a distance C1 corresponds to half the width of $W_1$.

The above-said first mark may be output in a plurality of numbers per colour.

The first mark has been explained in the above, and the operation which performs location adjustment by using the second pattern with reference to FIGS. 5-7 will be explained hereinbelow.

Referring to FIG. 5, the first mark may be formed in the image forming medium with an error (e.g., $e_L$, $e_M$, and $e_R$) due to a kinematic tolerance. In this case, each of the registration sensors (151-1, 151-2, 151-3) may sense an alignment or position of each of the second pattern and calculate a quantity thereof.

For example, with reference to FIG. 6, by subtracting a reference distance (G1) from a measured distance (M) between two patterns within one mark, an error value or differential ($\triangle$) in a vertical direction may be calculated as shown in math formula 3.

【Math formula 3】

$$\triangle = M - G_1$$

Here, $\triangle$ refers to an error value in a vertical direction, M refers to a distance between two patterns, and $G_1$ refers to a reference distance.

Accordingly, a sum of error values of ($\triangle$) for the first pattern ($L_T$) and the second pattern ($L_B$) in a vertical direction may be defined according to math formula 4, and each error value (e) corresponds to an error in a horizontal direction which may be defined according to math formula 5.

**【Math formula 4】**

$$\triangle = \triangle_T + \triangle_B$$

Herein, $\triangle_T$ refers to an error value in a vertical direction of the first pattern ($L_T$), and $\triangle_B$ refers to an error value in a vertical direction of the second pattern ($L_B$).

**【Math formula 5】**

$$\triangle_T = e \times \tan \theta_1$$
$$\triangle_B = e \times \tan \Phi_1$$

By using math formula 5, the above-described math formula 3 may be described as shown below.

**【Math formula 6】**

$$\triangle = e \times \tan \theta_1 + e \times \tan \Phi_1 = M - G_1$$

Therefore, an alignment or position to be corrected may be performed according to math formula 7 shown below.

**【Math formula 7】**

$$e = \frac{M - G_1}{\tan \theta_1 + \tan \Phi_1}$$

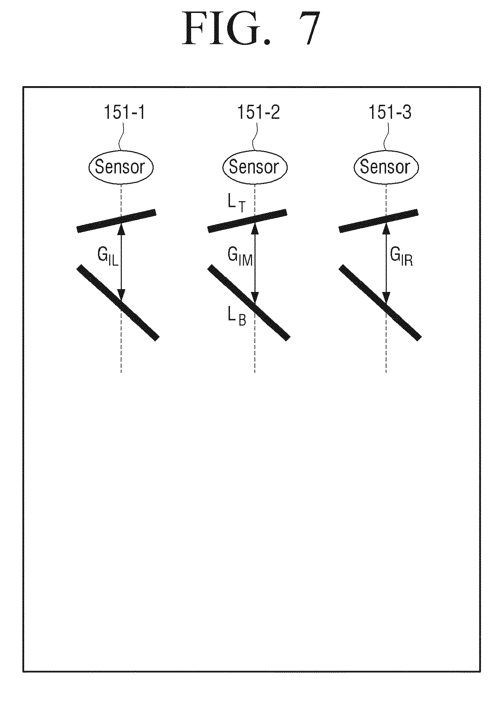

Correction of the value calculated from math formula 7 is shown, for example, in FIG. 7.

Therefore, the image forming apparatus 100 according to an exemplary embodiment, by using the first mark at the time when the image forming apparatus 100 is installed initially, or the time when consumables in the image forming apparatus 100 are replaced, calculates the above-described error values by a plurality of registrations and colours, and stores the calculated value. In addition, in the colour registration correction process thereafter, the above-described value may be used, and thus forming a pattern having enough margin (i.e., a pattern whose size is greater than a range which may be sensed by the registration sensor) with respect to a second mark is not needed, and therefore, toner volume required in generating a mark for colour registration may be reduced.

Meanwhile, in explaining FIGS. 4-7, it has been illustrated that two patterns in the first mark are inclined in a main scanning direction, but as illustrated in FIG. 8 , the patterns may be arranged in various inclines. For example, FIGS. 8a, 8b, when realizing the invention, illustrate at least one pattern (e.g., $L_1$ and $L_4$) in the first mark which may not have an incline in a main scanning direction. Though it has been illustrated that two patterns in the first mark have a different incline in a main scanning direction, as illustrated in FIG. 8c, two patterns in the first mark (e.g., $L_5$ and $L_6$) may

have the same inclines.

Referring to FIG. 9, the image forming apparatus sequentially forms the preset second mark in the image forming medium area corresponding to each location of a plurality of registration sensors (151-1, 151-2, 151-3) according to corresponding colours of the image forming apparatus. For example, the image forming apparatus 100 may form the second mark in black on three areas in a main scanning direction, form the second mark in cyan on three areas after a preset time (or distance), form the second mark in magenta on three areas after the same preset time (or distance), and form the second mark in yellow on three areas after the same preset time (or distance). Two patterns in a mark in a sub scanning direction may be located with the same interval within a whole number times of a circumference of an OPC drum.

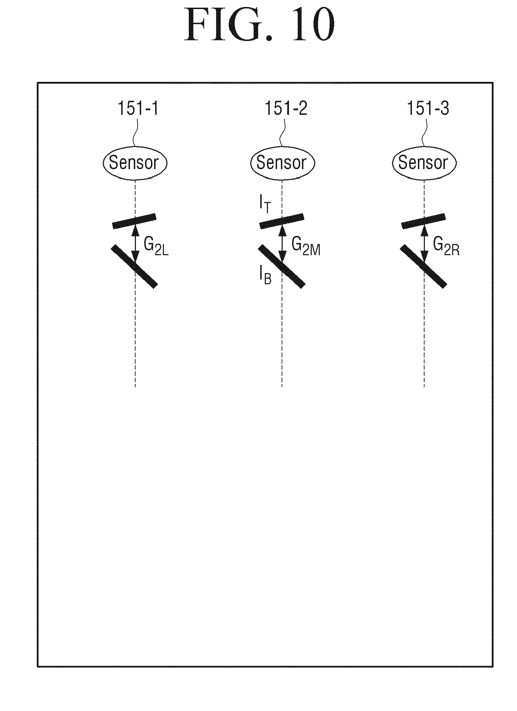

The image forming apparatus 100 according to the exemplary embodiment, in relation to FIGS. 4-7, already knows an alignment or position error amount according to an assembly tolerance through operations for location adjustment of the mark. Therefore, the first pattern used in the colour registration process with respect to the second mark does not need to have sufficient margin (i.e., the first pattern with respect to the second mark does not need to formed such that the size of the pattern is greater than a range which may be sensed by the registration sensor). The detailed shape of the second mark will be described below by referring to FIG. 10.

Referring to FIG. 10, the second mark is composed of two patterns whose interval changes in a main scanning direction of the image forming medium. For example, the second mark may be composed of two straight lines (e.g., $L_T$, $L_B$) which are not crossed, not parallel to each other, and do not contact each other, and has the same shape as the first mark. But, the second mark is distinct from the first mark in terms of size.

Here, the third pattern ($L_T$) is a straight line inclined by $\theta_2$ in a main scanning direction. The fourth pattern ($L_B$) is a straight line having a reverse incline by $\Phi_2$ in a main scanning direction.

The width of the second mark may be determined based on math formula 8 as shown below.

【Math formula 8】

$$W_B \leq W_2 \leq W_1$$

Here, $W_B$ is the minimum width recognizable by the registration sensor, $W_1$ is a width of the first mark, and $W_2$ is a width of the second mark, which satisfies math formula 9 as shown below. When realizing the invention, the width ($W_2$) of the second mark, for example, may be about 12 to about 20 mm. As can be seen from math formula 8, the width of the second mark should be greater than or equal to the minimum width recognizable by the registration and less than or equal to the width of the first mark. Here it noted however that the second mark should desirably have a width which is less than the width of the first mark.

【Math formula 9】

$$W_2 = L_T \cos \theta_2 = L_B \cos \Phi_2$$

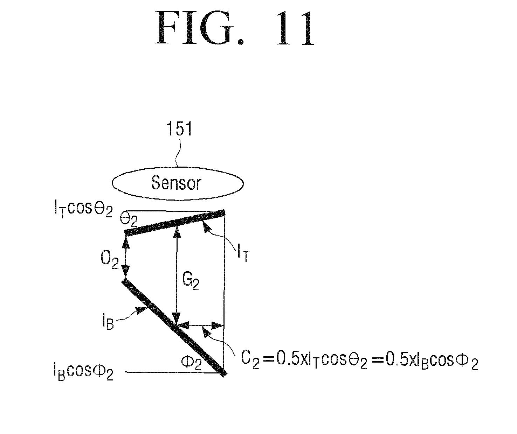

Here, $L_T$ is a length of the third pattern, $L_B$ is a length of the fourth pattern, $\theta_2$ is an angle between the third pattern and a main scanning direction, and $\Phi_2$ is an angle between the fourth pattern and a main scanning direction. As shown in FIG. 11, a distance C2, corresponds to half the width of $W_2$.

The above-said second mark may be output in a plurality of numbers per colour.

The second mark has been explained in the above discussion, and the operation which performs colour registration by using FIG. 11 will be explained hereinbelow.

As described above, a pattern for general registration has a width of about 20 to about 30mm, but the second mark according to the exemplary embodiment is realized having a width of about 12 to about 20 mm, and thus compared to the conventional image forming apparatuses, the invention may reduce toner required to form a registration pattern.

Referring to FIG. 11, by using a location of at least one pattern among two patterns composing the second mark, a Y offset to control the timing of forming the mark may be set. By performing such operations according to each of the colours, a Y offset may be corrected according to each of the colours.

By using an interval between two patterns composing the second mark, to control a printing location in right and left directions, an X offset to control the printing location in right and left directions may be set. By performing such an operation by right and left (or left/intermediate/right) directions, an X offset on one colour may be corrected. And, by performing the operation for each of the colours, an X offset may be corrected for each of the colours.

Meanwhile, in explaining FIGS. 9-11, it has been illustrated that two patterns in the second mark are inclined in a main scanning direction, but as illustrated in FIG. 8, when realizing the invention, at least one pattern in the second mark may not have an incline in a main scanning direction. Though it has been illustrated that two patterns in the second mark have a different incline in a main scanning direction, as illustrated in FIG. 8, two patterns in the second mark may have the same inclines.

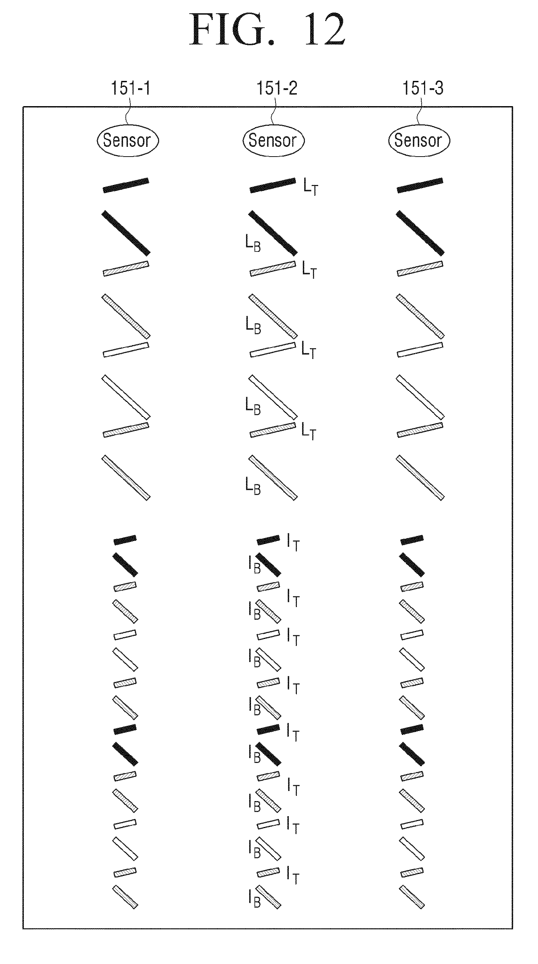

Referring to FIG. 12, the image forming apparatus sequentially forms a mark in the image forming medium area corresponding to each location of a plurality of registration sensors (151-1, 151-2, 151-3) according to corresponding colours of the image forming apparatus. For example, the image forming apparatus 100 may form the mark in black on three areas in a main scanning direction, form the mark in cyan on three areas after a preset time (or distance), form the mark in magenta on three areas after the same preset time (or distance), and form the mark in yellow on three areas after the same preset time (or distance). Two patterns in a mark in a sub scanning direction may be located with the same interval within a whole number times of a circumference of an OPC drum.

However, as can be seen from FIG. 12, the size of a second mark (particularly a width in the main scan direction) is reduced from the first mark, and the second mark is disposed entirely within a range which is recognizable by the corresponding sensor. Therefore, reduced toner consumption is obtained. Further, as can be seen from FIG. 12, a denser formation of marks may be achieved. That is, for example, more marks may be formed in a same area compared to conventional techniques, and/or the same number of marks may be formed in a smaller area compared to conventional techniques. For example, as shown in FIG. 12, a set of third marks may be formed in addition to the previous two set of marks, and thus more marks may be formed in a same area as compared to conventional techniques, with the marks being smaller with respect to a width of the marks.

It can also be seen that FIG. 12 is also an illustration of an example when the forming of a second mark and the forming of a first mark is performed sequentially. As explained above, for example, the forming of the second mark and the forming of the first mark may be performed sequentially if it is determined that an adjustment of a mark is necessary.

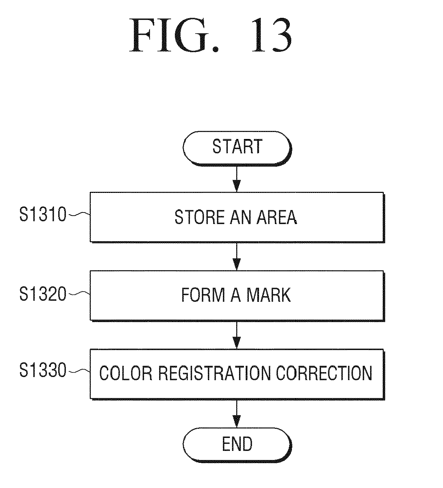

Referring to FIG. 13, an area of the image forming medium recognizable by the registration sensor is stored (S1310). This operation may be accomplished, for example, at the time when an image forming apparatus is initially installed, or after consumables in the image forming apparatus are replaced. The preset first mark may be formed at a range which is greater than a range recognizable by the registration sensor on the image forming medium, and the registration sensor may store an area of the image forming medium recognizable by the registration sensor which is sensed by using the formed first mark.

And, by using an area of the stored image forming medium, the second mark preset in a range recognizable by the registration sensor is formed in the image forming medium (S1320). For example, in an area of the image forming medium recognizable by the registration sensor, 'the second mark having two patterns whose interval changes in a main scanning direction of the image forming medium in a main scanning direction may be formed by colours supported by the image forming apparatus 100.

In addition, by using the formed second mark, registration correction is performed (S1330). For example, by using a plurality of the second marks formed in the image forming medium according to one or more the provided colours, colour registration correction may be performed.

Therefore, a colour registration method according to an exemplary embodiment forms a pattern which is greater than a width recognizable by the registration sensor whose deviation needs to be considered, figures out the location of a mark to be performed (i.e., formed on the image forming medium) afterwards, and forms a smaller-sized mark in the registration process afterwards. Therefore, toner consumption due to the process of registration may be reduced. In addition, by only forming a small-sized mark, registration may be performed, and thus a plurality of marks which are denser may be performed. A colour registration method such as FIG. 13 may be executed in the image forming apparatus 100 having the configuration of FIG. 1, and may also be executed in the image forming apparatus having other configurations or constitutions.

In addition, a colour registration method in the image forming apparatus as described above may be realized as a program (or application) including an algorithm executable by a computer, and the program may be stored in a non-transitory computer readable medium and provided for execution using the program or application, for example.

The terms "module", and "unit," as used herein, may refer to, but are not limited to, a software or hardware component or device, such as a Field Programmable Gate Array (FPGA) or Application Specific Integrated Circuit (ASIC), which performs certain tasks. A module or unit may reside on an addressable storage medium and may execute on one or more processors. Thus, a module or unit may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and modules/units may be combined into fewer components and modules/units or further separated into additional components and modules.

The apparatuses and methods according to the above-described embodiments may be recorded in non-transitory computer-readable media including program instructions to implement various operations embodied by a computer. The media may also include, alone or in combination with the program instructions, data files, data structures, and the like. A non-transitory computer readable medium may include media which semi-permanently stores data and is readable with a device, and not a media which stores data for a short time such as register, cache, memory, etc. For example, the above-described various applications or programs may be stored and provided in a non-transitory computer readable medium such as CD, DVD, hard disk, Blue-ray disk, USB, memory card, ROM.

Examples of program instructions include both machine code, such as produced by a compiler, and files containing higher level code that may be executed by the computer using an interpreter. The program instructions may be executed by one or more processors. The described hardware devices may act as one or more software modules in order to perform the operations of the above-described embodiments, or vice versa. In addition, a non-transitory computer-readable storage medium may be distributed among computer systems connected through a network and computer-readable codes or program instructions may be stored and executed in a decentralized manner. In addition, the computer-readable storage media may also be embodied in at least one application specific integrated circuit (ASIC) or Field Programmable Gate Array (FPGA).

The image forming apparatus and methods implemented according to the above-described example embodiments may use one or more processors. For example, a processing device may be implemented using one or more general-purpose or special purpose computers, such as, for example, a processor, a controller and an arithmetic logic unit, a central processing unit (CPU), a graphics processing unit (GPU), a digital signal processor (DSP), a microcomputer, a field programmable array, a programmable logic unit, an application-specific integrated circuit (ASIC), a microprocessor or any other device capable of responding to and executing instructions in a defined manner.

Each block of the flowchart illustrations may represent a unit, module, segment, or portion of code, which comprises one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

The foregoing example embodiments and advantages are merely exemplary and are not to be construed as limiting the present invention as defined by the claims.

**Claims**

1. An image forming apparatus, comprising:

   a registration unit configured to perform colour registration correction by using a registration sensor;
   an image forming unit configured to form a first mark which is large enough to fall within a range that is recognizable by the registration sensor on an image forming medium;
   a storage configured to store a specific area of the image forming medium recognizable by the registration sensor by using the formed first mark; and
   a controller configured to control the image forming unit to form a second mark to perform colour registration correction within the range recognizable by the registration sensor by using the specific area of the image forming medium stored in the storage, and to control the registration unit to perform colour registration correction by using the formed second mark.

2. The apparatus of claim 1, wherein a width of the second mark is less than a width of the first mark.

3. The apparatus of claim 1 or 2, wherein the controller is arranged to determine whether mark location adjustment is required,
   and when mark location adjustment is required, the controller is arranged to control the image forming unit to form the first mark on the image forming medium, to control the registration unit so that the registration sensor senses an area of the image forming apparatus recognizable by the registration sensor, by using the formed first mark, and to store the sensed area in the storage.

4. The apparatus of claim 3, wherein the controller is arranged to determine whether mark location adjustment is required based on at least one of whether the image forming apparatus is initially installed and whether a consumable in the image forming apparatus is replaced.

5. The apparatus of any one of the preceding claims, wherein an area of the image forming medium recognizable by the registration sensor comprises a Y offset to control timing of forming a mark and an X offset to control a printing location in right and left directions.

6. The apparatus of claim 5, wherein the controller is arranged to control the image forming apparatus to form the second mark within the range recognizable by the registration sensor, by using the X offset and the Y offset.

7. The apparatus of any one of the preceding claims, wherein the second mark is composed of two patterns whose interval changes in a main scanning direction of an image forming apparatus.

8. The apparatus of claim 7, wherein the image forming unit is arranged to sequentially form a plurality of second marks corresponding to each of a plurality of colours.

9. The apparatus of claim 8, wherein the registration unit is arranged to sense an X offset and a Y offset among a plurality of colours and to perform colour registration correction by using a plurality of second marks corresponding to each of the plurality of colours.

10. A colour registration method of an image forming apparatus having a registration sensor, the method comprising:

forming a first mark which is large enough to fall within a range that is recognizable by the registration sensor;
storing a specific area of an image forming medium recognizable by the registration sensor by using the formed first mark;
forming a second mark within the range recognizable by the registration sensor by using the stored area of the image forming medium; and
performing colour registration correction by using the formed second mark.

11. The method of claim 10, wherein a width of the second mark is less than a width of the first mark.

12. The method of claim 10 or 11, further comprising:

determining whether mark location adjustment is required;
wherein the forming the first mark, the sensing and storing the specific area are performed when the mark location adjustment is required.

13. The method of claim 12, wherein the determining comprises determining whether mark location adjustment is required based on at least one of whether the image forming apparatus is initially installed and whether a consumable in the image forming apparatus is replaced.

14. The method of any one of claims 10 to 13, wherein an area of the image forming medium recognizable by the registration sensor comprises a Y offset to control timing of forming a mark and an X offset to control a printing location in right and left directions.

15. The method of claim 14, wherein the forming the second mark comprises forming a second mark within the range recognizable by the registration sensor, by using the X offset and the Y offset.

# FIG. 1

<u>100</u>

| 110 | 170 | 160 |
|---|---|---|
| COMMUNICATION INTERFACE | | IMAGE FORMING UNIT |
| 120 | | 150 |
| STORAGE | CONTROLLER | REGISTRATION UNIT |
| 130 | | 140 |
| USER INTERFACE | | MEDIA DRIVING UNIT |

# FIG. 2

155

REGISTRATION
CONTROLLER

Voltage
or
ADC

PWM duty

(Sensor) ~151

153

152

P-Light

Light Source

180

Image Transfer Belt

# FIG. 3

(a)

151-1          151-2

Sensor          Sensor

ITB

(b)

Sensor —151

ITB Driving roller

# FIG. 4

# FIG. 5

# FIG. 6

$$C_1 = 0.5 \times L_T \cos\Theta_1 = 0.5 \times L_B \cos\Phi_1$$

# FIG. 7

# FIG. 8

(a)

(b)

(c)

$L_1$

$L_2$

$L_3$

$L_4$

$L_5$

$L_6$

# FIG. 9

# FIG. 10

# FIG. 11

151

Sensor

$I_T\cos\Theta_2$

$\Theta_2$

$O_2$

$G_2$

$I_T$

$I_B$

$I_B\cos\Phi_2$

$\Phi_2$

$C_2=0.5\times I_T\cos\Theta_2=0.5\times I_B\cos\Phi_2$

# FIG. 12

# FIG. 13

START

S1310 — STORE AN AREA

S1320 — FORM A MARK

S1330 — COLOR REGISTRATION CORRECTION

END